# EUROPÄISCHE PATENTSCHRIFT

(11) **EP 0 559 670 B1**
(45) Veröffentlichungstag und Bekanntmachung des Hinweises auf die Patenterteilung: **12.04.1995**
(21) Anmeldenummer: 91919602.2
(22) Anmeldetag: 23.10.1991
(51) Int. Cl.: E02D 29/14

(54) **EINSATZTEIL FÜR EINEN SCHACHT**
CAP FOR A SHAFT
INSERT POUR UN PUITS

(30) Priorität: 26.11.1990 AT 2392/90
(43) Veröffentlichungstag der Anmeldung: 15.09.1993
(73) Patentinhaber: GUGGEMOS, Horst, A-8043 Graz (AT)
(72) Erfinder: GUGGEMOS, Horst, A-8043 Graz (AT)
(74) Vertreter: Brauneiss, Leo, Dipl.Ing.
(86) Internationale Anmeldenummer: AT9100114
(87) Internationale Veröffentlichungsnummer: WO9209753

(56) Entgegenhaltungen:
- DE-A- 3 516 277
- US-A- 3 173 442
- US-A- 3 712 009
- US-A- 4 067 659
- US-A- 4 650 365
- PATENT ABSTRACTS OF JAPAN vol. 10, no. 73 (M-463)(2130) 22. März 1986 & JP,A,60215 928 ( NITSUSHIYOU KOUSAN KK ) 29. Oktober 1985
- PATENT ABSTRACTS OF JAPAN vol. 9, no. 111 (M-379)(1834) 15. Mai 1985 & JP,A,59233 029 ( NITSUSHIYOU KOUSAN KK ) 27. Dezember 1984

## Beschreibung

Die Erfindung betrifft einen Einsatzteil für einen Schacht, vorzugsweise einen belüftbaren Kanalschacht, mit einer Wanne aus flüssigkeitsdichtem Material, vorzugsweise aus Kunststoff, deren Hohlraum über wenigstens einen Verbindungskanal mit dem unterhalb der Wanne befindlichen Teil des Schachtes in Verbindung steht, wobei der Verbindungskanal durch ein Abschlußorgan verschließbar ist.

Kanäle, wie Kanäle für die Kanalisation, Kanäle für die Wasserversorgung, Kabelkanäle und dergleichen müssen in der Regel belüftet werden. Vor allem bei Kanalisationsanlagen ist die Entlüftung wichtig, denn dort bilden sich durch aggressive oder angefaulte Abwässer Schwefelwasserstoffdämpfe, aus welchen bei unzureichender Entlüftung durch Verbindung mit Kondenswasser Schwefelsäure entsteht, wodurch die Bauwerke angegriffen werden. Weiters entstehen in Kanälen häufig gefährliche Gase, die, wenn keine ausreichende Entlüftung besteht, eine große Gefahr für das Wartungspersonal darstellen.

Die Entlüftung erfolgt in der Regel über die zu den Kanälen führenden Einstiegsschächte, welche im Erdbodenniveau durch Schachtabdeckungen aus Beton, Stahl oder aus Gußeisen verschlossen sind, in welchen eine ausreichende Anzahl von Lüftungsöffnungen vorgesehen ist. Bei Auftreten von Niederschlägen ergibt sich jedoch der Nachteil, daß Oberflächenwasser durch die Lüftungsöffnungen in den Kanal gelangt. Die Menge dieses Niederschlagswassers kann bei Auftreten von starken Regenfällen beträchtlich sein. Bei Kabelkanälen besteht bei Zutritt großer Wassermengen die Gefahr von Kurzschlüssen. Bei Kanalisationsanlagen ist der Kanalquerschnitt oft nicht ausreichend, um die plötzlich anfallenden großen Mengen von Oberflächenwasser abzuführen. Bei der heute vielfach verwendeten Kanalisationsart des Trennsystems, bei welchem verunreinigte Abwässer einerseits und nicht verunreinigtes Wasser, insbesondere Oberflächenwasser, anderseits in gesonderten Kanalsystemen abgeleitet werden, ist es unbedingt erforderlich, das Eindringen von Oberflächenwasser in das die verunreinigten Abwässer führende Kanalsystem zu verhindern, denn einerseits ist der Querschnitt dieses Kanalsystems nicht für die Abfuhr so großer plötzlich auftretender Wassermengen dimensioniert und anderseits werden die Kläranlagen für diese verunreinigten Abwässer sowie allenfalls vorhandene Pumpwerke bei plötzlichem Auftreten großer Wassermengen stark belastet.

Man hat daher bereits vorgeschlagen (US-A-4 650 365), in einem Schacht unterhalb der Schachtabdeckung einen Einsatzteil mit einer Wanne aus flüssigkeitsdichtem Material anzuordnen, wobei der Hohlraum der einen Verbindungskanal mit dem unterhalb der Wanne befindlichen Teil des Schachtes in Verbindung steht und im Verbindungskanal ein Abschlußorgan angeordnet ist. Der Einsatzteil weist hiebei an seinem oberen Ende einen seitlich abstehenden Flansch auf, der unter Zwischenschaltung einer Dichtung an einem eine Schachtabdeckung abstützenden Rahmen aufliegt.

Bei dieser bekannten Ausführungsform ist dieses Abschlußorgan als Überdruckventil ausgebildet, welches normalerweise geschlossen ist, sodaß ein Eindringen von Oberflächenwasser über den Verbindungskanal verhindert wird, und das nur öffnet, wenn im Schacht unterhalb des Einsatzteiles bzw. in dem mit diesem Schacht verbundenen Abwasserkanal ein Überdruck auftritt. Die im Abwasserkanal entstehenden Gase können somit lediglich bei einem entsprechend erhöhten Druck, bei dem das Abschlußorgan öffnet, entweichen. Eine freie Ventilation des Schachtes und des damit verbundenen Abwasserkanals über die Lüftungsöffnungen in der Schachtabdeckung ist somit bei dieser bekannten Ausführungsform nicht gegeben. Sich bildende aggressive und/oder gefährliche Gase werden daher nicht dauernd beseitigt, sodaß die eingangs beschriebenen Nachteile auch bei dieser bekannten Ausbildung gegeben sind.

Aus der US-A-4 957 389 ist ein Einsatzteil für einen Schacht bekannt geworden, der aus einer flüssigkeitsdicht an einem Vorsprung der Schachtwand abgestützten Wanne besteht, in deren Boden eine durch einen Stopfen verschließbare Flüssigkeitsaustrittsöffnung vorgesehen ist. Soll das sich in der Wanne angesammelte Wasser abgeführt, die Wanne somit entleert werden, so muß der Stopfen händisch entfernt und nach Entleerung wieder händisch in die Flüssigkeitsaustrittsöffnung eingesetzt werden. Eine Be- bzw. Entlüftung des unterhalb des Einsatzteiles befindlichen Schachtabschnittes findet bei dieser bekannten Ausführung nicht statt.

Die vorliegende Erfindung hat sich zur Aufgabe gestellt, einen Einsatzteil für einen Schacht der eingangs beschriebenen Art derart zu verbessern, daß bei Auftreten großer Mengen von Oberflächenwasser infolge starker Regenfälle ein Eindringen derselben in den unterhalb der Wanne befindlichen Teil des Schachtes weitgehend verhindert wird, bei Aufhören der starken Regenfälle jedoch eine dauernde freie Entlüftung des Schachtes gewährleistet ist. Zur Lösung dieser Aufgabe schlägt die Erfindung vor, daß das Abschlußorgan in Abhängigkeit vom Flüssigkeitsspiegel in der Wanne betätigt wird, wobei es bei Erreichen eines vorbestimmten Flüssigkeitsspiegels abschließt. Bei der erfindungsgemäßen Ausbildung ist das Abschlußorgan in der Regel geöffnet, sodaß eine Verbindung zwischen dem Hohlraum der Wanne und dem unterhalb der Wanne befindlichen Teil des Schachtes hergestellt ist, über die eine dauernde Entlüftung des Schachtes erfolgt. Dringt bei starken Regengüssen eine große Menge von Oberflächenwasser in den Schacht, beispielsweise über die Lüftungsöffnungen in der Schachtabdeckung, ein, so sammelt sich dieses Oberflächenwasser in der Wanne, sodaß der Flüssigkeitsspiegel ansteigt und hiedurch ein Abschließen des Abschlußorganes bewirkt wird, sodaß über den Verbindungskanal kein Regenwasser in den Schacht eindringen kann.

Die Betätigung des Abschlußorganes in Abhängigkeit vom Flüssigkeitsspiegel in der Wanne kann auf verschiedene Art und Weise erfolgen, beispielsweise durch in der Wanne befindliche, den Flüssigkeitsspiegel ermittelnde Sensoren, die eine elektrische Steuerung des Abschlußorganes bewirken. Vorzugsweise ist aber das Abschlußorgan von einem Schwimmerventil gebildet, welches bei Ansteigen des Flüssigkeitsspiegels in der Wanne abschließt. Das Abschlußorgan kann hiebei mit einem gesonderten Schwimmkörper mechanisch gekuppelt sein. Eine besonders einfache Ausführungsform ergibt sich jedoch dann, wenn das Abschlußorgan selbst aus einem, vorzugsweise kugelförmigen, Schwimmkörper besteht, der mit einem im Verbindungskanal angeordneten Ventilsitz zusammenwirkt.

Erfindungsgemäß kann der Abschnitt des Verbindungskanals unterhalb des Abschlußorganes, von einer Mündung im Bereich des Wannenbodens ausgehend, aufwärts verlaufen. Hiedurch ergibt sich eine besonders einfache konstruktive Ausführungsform. Tritt bei Ansteigen des Flüssigkeitsspiegels in der Wanne über diese Mündung Wasser in den Verbindungskanal ein, so wird der das Abschlußorgan bildende Schwimmkörper nach oben bewegt, bis er an einem Ventilsitz zur Anlage gelangt und damit den Verbindungskanal abschließt. Der Abschnitt des Verbindungskanals oberhalb des Abschlußorganes kann in eine Öffnung in der Seitenwand der Wanne münden, wobei zwischen dieser Seitenwand und der Schachtwand ein mit dem unterhalb der Wanne befindlichen Teil des Schachtes verbundener Zwischenraum freigehalten ist, über welchen bei geöffnetem Abschlußorgan die Belüftung des Schachtes erfolgt. Es kann aber auch die Anordnung so getroffen sein, daß der Abschnitt des Verbindungskanales oberhalb des Abschlußorganes über einen Krümmer in eine Öffnung im Wannenboden mündet. In diesem Fall erfolgt die Belüftung des unterhalb der Wanne befindlichen Teiles des Schachtes unmittelbar über die Öffnung im Wannenboden, die entsprechend groß gehalten werden kann.

Bei einer Ausführungsform des erfindungsgemäßen Einsatzteiles sind mehrere Verbindungskanäle entlang der Seitenwand der Wanne angeordnet. Es können dann die Querschnitte der Verbindungskanäle klein gehalten werden und es ist bei Ausfall oder bei fehlerhafter Funktion eines Abschlußorganes immer noch ein Wasserzutritt weitgehend unterbunden, da nur eine dem Querschnitt des betreffenden Verbindungskanales entsprechende Wassermenge in den unterhalb der Wanne befindlichen Teil des Schachtes gelangen kann.

Die Wanne soll zweckmäßig so ausgebildet sein, daß bei einem Zutritt auch geringerer Mengen von Oberflächenwasser der Flüssigkeitsspiegel rasch einen Wert erreicht, bei dem die Abschlußorgane in ihre Schließstellung gelangen. Zu diesem Zweck ist vorzugsweise in der Mitte der Wanne ein vom Wannenboden ausgehender Füllkörper vorgesehen. Durch diesen Füllkörper wird nicht nur das Volumen der Wanne verringert, sondern auch eine Versteifung der Wanne, insbesondere des Wannenbodens, erzielt und verhindert, daß sich der Wannenboden unter dem Gewicht der in der Wanne befindlichen, durch die Lüftungsöffnungen eindringenden Ablagerungen wie Sand od.dgl. durchbiegt oder sogar durchbricht.

Es kann aber auch ein einziger Verbindungskanal vorgesehen sein, dessen im Bereich des Wannenbodens angeordnete Mündung in Abstand von der Seitenwand der Wanne, vorzugsweise in einer Vertiefung im Wannenboden, angeordnet ist. Dadurch wird die konstruktive Ausbildung der Wanne einfacher und platzsparender, was insbesondere bei Schächten kleinerer Abmessungen von Vorteil ist.

Nach Aufhören der Regenfälle muß das in der Wanne befindliche Restwasser entfernt werden, damit der Wasserspiegel in der Wanne wieder einen Wert erreicht, bei dem die Abschlußorgane in den Verbindungskanälen öffnen und über die Verbindungskanäle wieder eine Belüftung erfolgt. Zu diesem Zweck steht der Hohlraum der Wanne über wenigstens eine zusätzlich zum Verbindungskanal bzw. zu den Verbindungskanälen vorgesehene, in an sich bekannter Weise im Wannenboden angeordnete Flüssigkeitsaustrittsöffnung mit dem unterhalb der Wanne befindlichen Teil des Schachtes in Verbindung, wobei die Gesamtquerschnittsfläche der Flüssigkeitsaustrittsöffnung(en) geringer ist als jene des Verbindungskanales bzw. der Verbindungskanäle. Durch diese Flüssigkeitsaustrittsöffnung(en) gelangt zwar dann, wenn sich in der Wanne Wasser befindet, immer eine gewisse Wassermenge in den Teil des Schachtes unterhalb der Wanne, jedoch ist diese Wassermenge infolge der Kleinheit der Querschnittsfläche gering und verursacht keine Nachteile. Es soll ja in erster Linie nicht die Zufuhr von geringfügigen Wassermengen verhindert werden, sondern die plötzliche Zufuhr von großen Wassermengen pro Zeiteinheit, die im mit dem Schacht verbundenen Kanal Schaden anrichten, infolge des geringen Kanalquerschnittes nicht mehr abgeführt werden können oder Kläranlagen und Pumpwerke temporär stark belasten.

Der zweckmäßig unmittelbar unterhalb der Schachtabdeckung angeordnete Einsatzteil muß entfernt werden können, einerseits zu Reinigungszwecken, andererseits, um eine Begehung des Schachtes zu ermöglichen. Es muß aber auch ein Wasserzutritt zwischen dem Einsatzteil und der Schachtwand unterbunden werden. Hiezu ist es bereits bekannt, zwischen einem am oberen Ende der Wanne seitlich abstehenden Flansch und einem Vorsprung der Schachtwand, der diesen Flansch abstützt, eine Dichtung vorzusehen. Eine besonders gute Abdichtung ergibt sich dann, wenn diese Dichtung von einem aufblasbaren, flexiblen Schlauch gebildet ist.

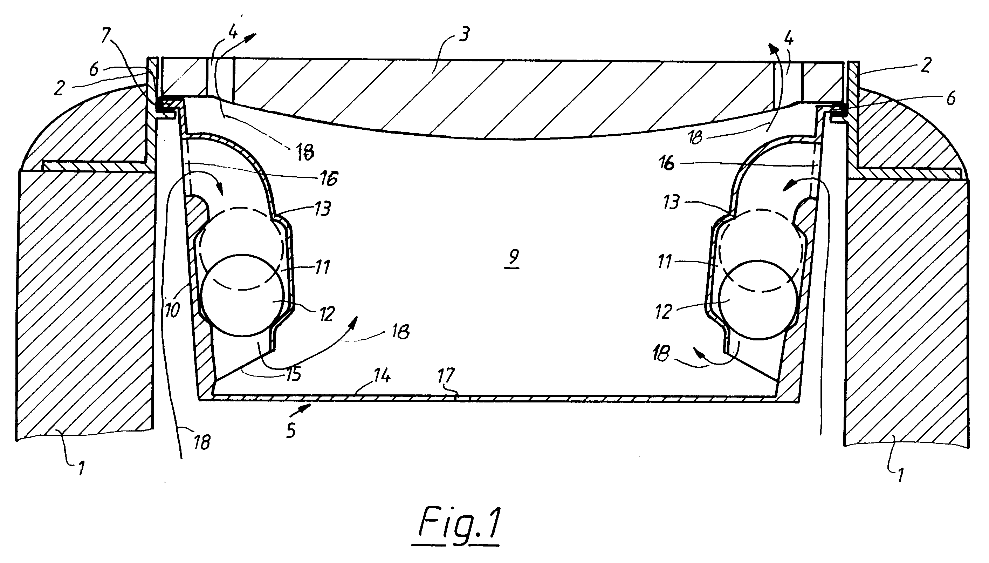

In der Zeichnung ist die Erfindung anhand von Ausführungsbeispielen schematisch veranschaulicht. Die Fig.1 bis 4 zeigen Schnitte durch verschiedene Ausführungen eines in einen Schacht eingesetzten Einsatzteiles, in einer in Schachtlängsrichtung verlaufenden Ebene.

Bei allen Ausführungen ist am oberen Ende eines durch Schachtwände 1 begrenzten lotrechten Schachtes ein Rahmen 2 vorgesehen, der eine Auflage für eine Schachtabdeckung 3 bildet, die etwa in Erdbodenniveau bzw. Straßenniveau angeordnet ist. Die Schachtabdeckung 3 weist mehrere Lüftungsöffnungen 4 auf, die so bemessen sind, daß die Summe der Querschnitte eine ausreichende Belüftung des Schachtes gewährleistet, der Querschnitt jeder Lüftungsöffnung 4 jedoch nur so groß ist, daß diese keine Gefahr für Menschen oder Tiere darstellen.

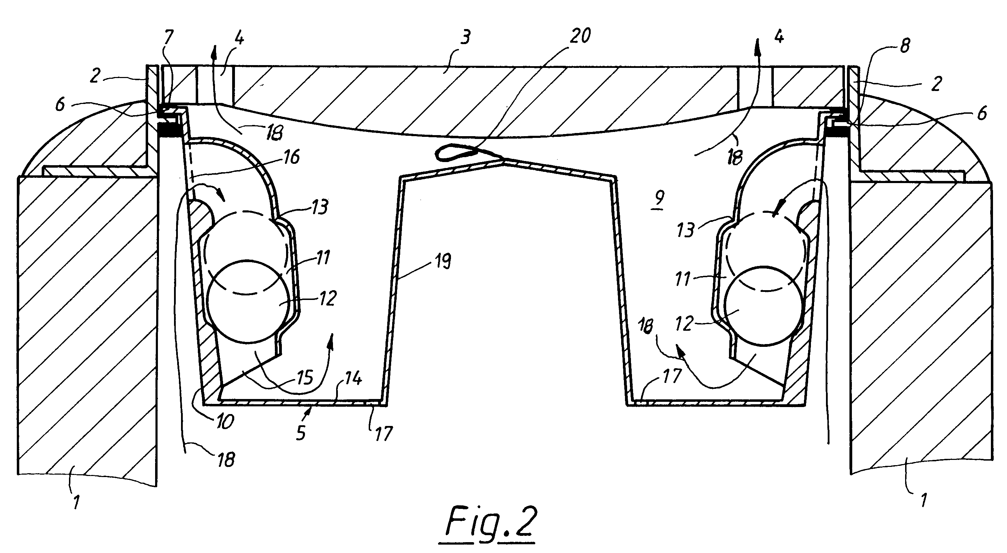

Unmittelbar unterhalb der Schachtabdeckung 3 ist ein Einsatzteil 5 vorgesehen, der sich mit einem seitlich abstehenden Flansch 6 gleichfalls am Rahmen 2 abstützt. Um eine gute Abdichtung dieses Einsatzteiles 5 zu gewährleisten, ist der Flansch 6 mit einer Gummidichtung 7 umgeben. Ferner kann, wie aus Fig.2 hervorgeht, zusätzlich oder an Stelle der Gummidichtung 7 zwischen der Außenwand des Einsatzteiles 5 und der Schachtwand 1 bzw. dem Rahmen 2 ein aufblasbarer flexibler Schlauch 8 angeordnet sein, der nach seinem Aufblasen eine absolut flüssigkeitsdichte Abdichtung gewährleistet. Dadurch wird sichergestellt, daß ein durch den Spalt zwischen dem Rahmen 2 und der Schachtabdeckung 3 eindringendes Oberflächenwasser nicht in den Schacht gelangt.

Der Einsatzteil 5 besteht aus einer Wanne 9 aus Kunststoff, die beim Ausführungsbeispiel nach Fig.1 trogförmig ausgebildet ist. Die Seitenwand 10 der Wanne 9 befindet sich in Abstand von der Schachtwand 1. Im Inneren der Wanne 9 sind über den Umfang verteilt mehrere Verbindungskanäle 11 vorgesehen, in welchen sich ein Abschlußorgan 12 bildende kugelförmige Schwimmkörper befinden, die mit einem Ventilsitz 13 zusammenwirken. Die Verbindungskanäle 11 erstrecken sich etwa lotrecht von einer im Bereich des Wannenbodens 14 angeordneten Mündung 15 ausgehend aufwärts und münden über einen Bogen in eine Öffnung 16 in der Seitenwand 10 der Wanne 9. Im Wannenboden 14 ist eine kleine Flüssigkeitsaustrittsöffnung 17 vorgesehen.

Dringt durch die Lüftungsöffnungen 4 in der Schachtabdeckung 3 kein Oberflächenwasser ein und ist daher im Inneren der Wanne 9 kein Wasser vorhanden, so befinden sich die als Schwimmkörper ausgebildeten Abschlußorgane 12 in der in Fig.1 mit voll ausgezogenen Linien dargestellten unteren Stellung, in der kein Abschluß des Verbindungskanales 11 erfolgt. Daher ist eine freie Luftzirkulation von dem unterhalb der Wanne 9 befindlichen Teil des Schachtes über den Verbindungskanal 11 und die Lüftungsöffnungen 4 zur Atmosphäre entsprechend den eingezeichneten Pfeilen 18 sichergestellt. Dringt jedoch durch die Lüftungsöffnungen 4, beispielsweise infolge eines starken Regens, eine größere Menge von Oberflächenwasser in das Innere der Wanne 9 ein, die durch die kleine Flüssigkeitsaustrittsöffnung 17 nicht abgeführt werden kann, so steigt der Flüssigkeitsspiegel in der Wanne 9 an, wodurch die als Schwimmkörper ausgebildeten Abschlußorgane 12 angehoben werden und schließlich am Ventilsitz 13 anliegen, wodurch ein dichter Abschluß der Verbindungskanäle 11 gewährleistet ist und somit das in der Wanne 9 befindliche Wasser über diese Verbindungskanäle 11 nicht in den unterhalb der Wanne 9 befindlichen Teil des Schachtes gelangen kann. Da der Querschnitt der Flüssigkeitsaustrittsöffnung 17 klein ist, wird über diese Öffnung nur ein ganz kleiner Anteil des in der Wanne 9 befindlichen Wassers abgeführt. Ist die Wanne 9 voll mit Wasser, so kann kein weiteres Wasser über die Lüftungsöffnungen 4 eindringen, das Oberflächenwasser fließt somit dann über die Schachtabdeckung 3 hinweg. Es ist somit zweckmäßig, das Volumen der Wanne 9 klein zu halten. Zu diesem Zweck ist bei der Ausführungsform nach Fig.2 etwa in der Mitte der Wanne 9 ein vom Wannenboden 14 ausgehender Füllkörper 19 vorgesehen, welcher auch eine Versteifung des Wannenbodens 14 bewirkt. An diesem kann zur leichteren Entfernung des Einsatzteiles 5 aus dem Schacht eine Schlaufe 20 vorgesehen sein. Weiters sind bei dieser Ausführungsform im Wannenboden 14 mehrere kleine Flüssigkeitsaustrittsöffnungen 17 vorgesehen. Von diesen Unterschieden abgesehen, entspricht die Ausführungsform nach Fig. 2 jener in Fig.1.

Nach Beendigung der Zufuhr von Oberflächenwasser durch die Lüftungsöffnungen 4, beispielsweise infolge Aufhörens des Regens, entleert sich die Wanne 9 langsam über die Flüssigkeitsaustrittsöffnungen 17. Die als Schwimmkörper ausgebildeten Abschlußorgane 12 sinken dadurch nach unten und heben vom Ventilsitz 13 ab, sodaß wieder eine freie Luftzirkulation im Sinne der Pfeile 18 erfolgen kann.

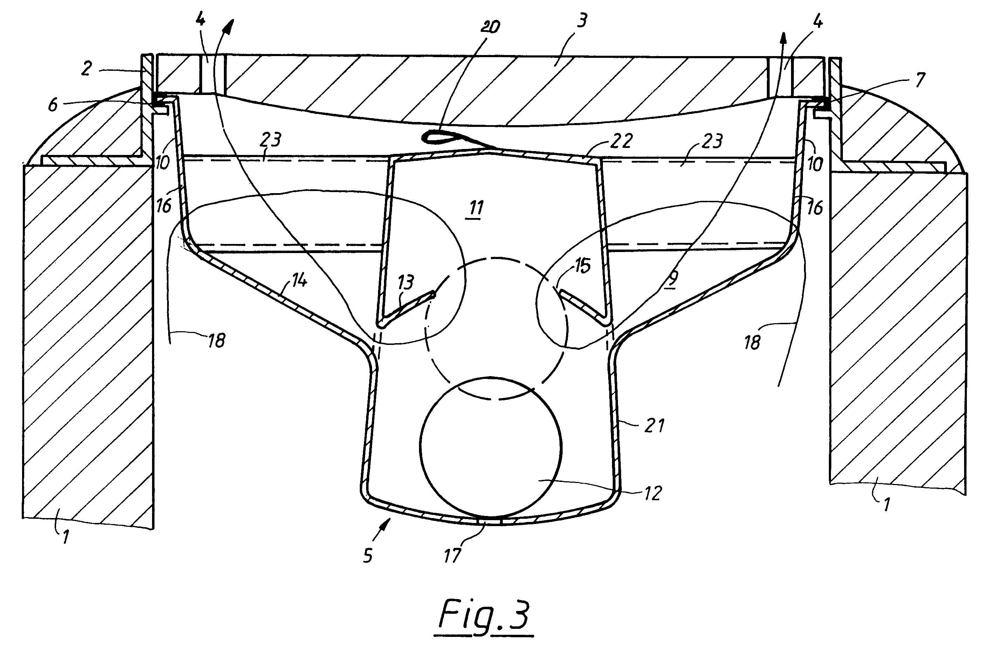

Bei der Ausführungsform nach Fig.3 ist ein einziger Verbindungskanal 11 vorgesehen, der in der Mitte der Wanne 9 angeordnet ist. Der bei dieser Ausführungsform schräg nach unten verlaufende Wannenboden 14 geht in eine Vertiefung 21 über, an deren tiefster Stelle sich die Flüssigkeitsaustrittsöffnung 17 befindet und die das als Schwimmkörper ausgebildete kugelförmige Abschlußorgan 12 aufweist. Oberhalb der Vertiefung 21 befindet sich die Mündung 15 des Verbindungskanales 11, die gleichzeitig als Ventilsitz 13 ausgebildet ist. Der Verbindungskanal 11 besteht bei der Ausführungsform nach Fig.3 aus einer oben geschlossenen Haube 22, die seitlich an zumindest zwei einander gegenüberliegenden Stellen mit Rohren 23 verbunden ist, die einerseits in das Innere der Haube 22 münden und anderseits mit Öffnungen 16 in der Seitenwand 10 der Wanne 9 in Verbindung stehen. Diese Haube 22 bildet gleichzeitig einen Füllkörper, der das Volumen der Wanne 9 in gewünschter Weise verringert. Befindet sich in der Wanne 9 kein Wasser, so nimmt das als kugelförmiger Schwimmkörper ausgebildete Abschlußorgan 12 die in der Zeichnung voll ausgezogene untere Lage ein. Der Entlüftungsvorgang des Schachtes findet dann wieder in Richtung der Pfeile 18 statt, wobei die bei vom Ventilsitz 13 abgehobenem Abschlußorgan 12 aus der Haube 22 austretenden Gase seitlich an den Rohren 23 vorbeiströmen können. Füllt sich hingegen die Wanne 9 durch über die Lüftungsöffnungen 4 eintretendes Oberflächenwasser, so gelangt das Abschlußorgan 12 am Ventilsitz 13 zur Anlage, ein Wassereintritt in die Haube 22 und von dieser über die Rohre 23 in den Raum des Schachtes unterhalb der Wanne 9 wird somit verhindert.

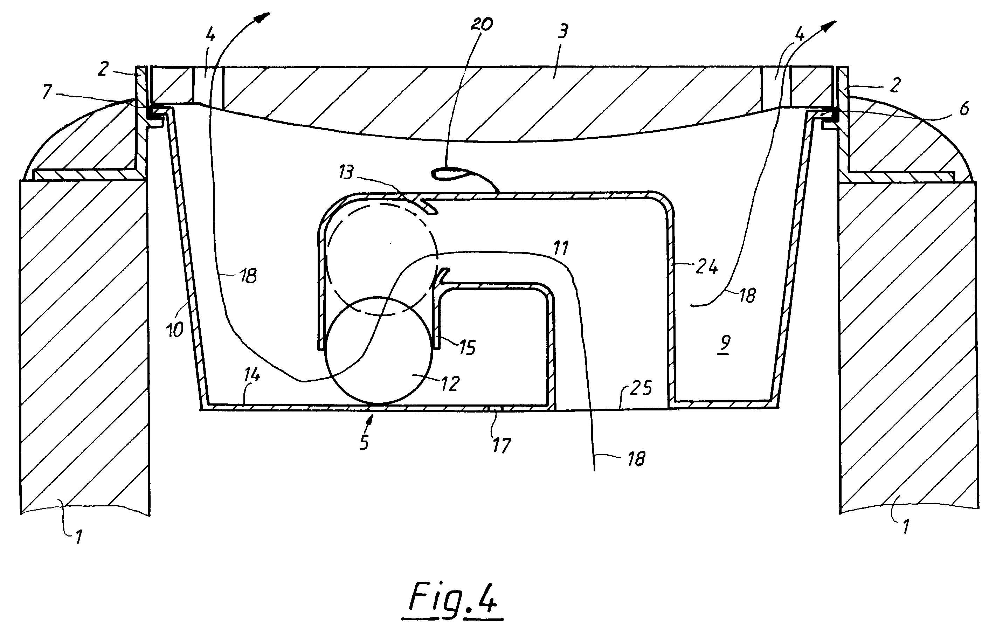

Bei der Ausführungsform nach Fig.4 ist wieder lediglich ein einziger Verbindungskanal 11 vorgesehen, dessen Mündung 15 sich im Bereich des Wannenbodens 14 in Abstand von diesem befindet und der über einen Krümmer 24 mit einer Öffnung 25 im Wannenboden 14 verbunden ist. Das Abschließen dieses Verbindungskanales 11 erfolgt wieder über ein von einem kugelförmigen Schwimmkörper gebildetes Abschlußorgan 12, das mit einem Ventilsitz 13 zusammenwirkt, sobald dieses Abschlußorgan 12 durch Ansteigen des Flüssigkeitsspiegels in der Wanne 9 angehoben wird. Die Strömungsrichtung der aus dem Schacht entweichenden Gase ist wieder durch Pfeile 18 symbolisiert.

## Patentansprüche

1. Einsatzteil für einen Schacht, vorzugsweise einen belüftbaren Kanalschacht, mit einer Wanne (9) aus flüssigkeitsdichtem Material, vorzugsweise aus Kunststoff, deren Hohlraum über wenigstens einen Verbindungskanal mit dem unterhalb der Wanne befindlichen Teil des Schachtes in Verbindung steht, wobei der Verbindungskanal (11) durch ein Abschlußorgan (12) verschließbar ist, dadurch gekennzeichnet, daß das Abschlußorgan in Abhängigkeit vom Flüssigkeitsspiegel in der Wanne (9) betätigt wird, wobei es bei Erreichen eines vorbestimmten Flüssigkeitsspiegels abschließt.

2. Einsatzteil nach Anspruch 1, dadurch gekennzeichnet, daß das Abschlußorgan (12) von einem Schwimmerventil gebildet ist.

3. Einsatzteil nach Anspruch 1 und 2, dadurch gekennzeichnet, daß das Abschlußorgan (12) aus einem, vorzugsweise kugelförmigen, Schwimmkörper besteht, der mit einem im Verbindungskanal (11) angeordneten Ventilsitz (13) zusammenwirkt.

4. Einsatzteil nach Anspruch 1, 2 oder 3, dadurch gekennzeichnet, daß der Abschnitt des Verbindungskanals (11) unterhalb des Abschlußorganes von einer Mündung (15) im Bereich des Wannenbodens (14) ausgehend aufwärts verläuft.

5. Einsatzteil nach Anspruch 4, dadurch gekennzeichnet, daß der Abschnitt des Verbindungskanals (11) oberhalb des Abschlußorganes (12) in eine Öffnung (16) in der Seitenwand (10) der Wanne (9) mündet, wobei zwischen dieser Seitenwand (10) und der Schachtwand (1) ein mit dem unterhalb der Wanne (9) befindlichen Teil des Schachtes verbundener Zwischenraum freigehalten ist.

6. Einsatzteil nach Anspruch 4, dadurch gekennzeichnet, daß der Abschnitt des Verbindungskanales (11) oberhalb des Abschlußorganes (12) über einen Krümmer (24) in eine Öffnung (25) im Wannenboden (14) mündet (Fig.4).

7. Einsatzteil nach einem der Ansprüche 1 bis 6, dadurch gekennzeichnet, daß mehrere Verbindungskanäle (11) entlang der Seitenwand (10) der Wanne (9) angeordnet sind.

8. Einsatzteil nach Anspruch 7, dadurch gekennzeichnet, daß in der Mitte der Wanne (9) ein vom Wannenboden (14) ausgehender Füllkörper (19) vorgesehen ist (Fig.2).

9. Einsatzteil nach den Ansprüchen 1 bis 4, dadurch gekennzeichnet, daß ein einziger Verbindungskanal (11) vorgesehen ist, dessen im Bereich des Wannenbodens (14) angeordnete Mündung in Abstand von der Seitenwand (10) der Wanne (9), vorzugsweise in einer Vertiefung (21) im Wannenboden angeordnet ist.

10. Einsatzteil nach einem der Ansprüche 1 bis 9, dadurch gekennzeichnet, daß der Hohlraum der Wanne (9) über wenigstens eine zusätzlich zum Verbindungskanal bzw. den Verbindungskanälen (11) vorgesehene, in an sich bekannter Weise im Wannenboden (14) angeordnete Flüssigkeitsaustrittsöffnung (17) mit dem unterhalb der Wanne (9) befindlichen Teil des Schachtes in Verbindung steht, wobei die Gesamtquerschnittsfläche der Flüssigkeitsaustrittsöffnung(en) (17) geringer ist als jene des Verbindungskanales bzw. der Verbindungskanäle (11).

11. Einsatzteil nach einem der Ansprüche 1 bis 9, wobei die Wanne im Schacht flüssigkeits- und gasdicht eingesetzt und an ihrem oberen Ende mit einem seitlich abstehenden Flansch versehen ist, der unter Zwischenschaltung einer Dichtung an einem Vorsprung der Schachtwand, vorzugsweise an einem eine Schachtabdeckung abstützenden Rahmen, aufliegt, dadurch gekennzeichnet, daß die Dichtung von einem aufblasbaren flexiblen Schlauch (8) gebildet ist.

## Claims

1. An insert for a shaft, preferably a manhole shaft which can be ventilated, having a tank (9) made of a fluid-tight material, preferably a plastics material, the hollow space of which tank (9) is connected via at least one connecting channel to the shaft part located below the tank, the connecting channel (11) being closable by means of a closure member (12), characterised in that the closure member is actuated dependent on the fluid level in the tank (9), it closing when a predetermined fluid level is reached.

2. An insert in accordance with Claim 1, characterised in that the closure member (12) is formed by a float valve.

3. An insert in accordance with Claim 1 and 2, characterised in that the closure member (12) is composed of a floating body, preferably spherical, which co-operates with a valve seat (13) arranged in the connecting channel (11).

4. An insert in accordance with Claim 1, 2 or 3, characterised in that the portion of the connecting channel (11) which is below the closure member runs in an upward direction from a mouth (15) in the region of the tank base (14).

5. An insert in accordance with Claim 4, characterised in that the portion of the connecting channel (11) which is above the closure member (12) issues into an opening (16) in the lateral wall (10) of the tank (9), a gap connected to the shaft part located below the tank (9) being kept free between this lateral wall (10) and the shaft wall (1).

6. An insert in accordance with Claim 4, characterised in that the portion of the connecting channel (11) which is above the closure member (12) issues via an elbow (24) into an opening (25) in the tank base (14) (Fig. 4).

7. An insert in accordance with any one of Claims 1 to 6, characterised in that a plurality of connecting channels (11) are arranged along the lateral wall (10) of the tank (9).

8. An insert in accordance with Claim 7, characterised in that a filling body (19) originating from the tank base (14) is provided in the centre of the tank (9) (Fig. 2).

9. An insert in accordance with Claims 1 to 4, characterised in that a single connecting channel (11) is provided whose mouth arranged in the region of the tank base (14) is arranged at a distance from the lateral wall (10) of the tank (9), preferably in a depression (21) in the tank base.

10. An insert in accordance with any one of Claims 1 to 9, characterised in that the hollow space of the tank (9) is connected to the shaft part located below the tank (9) via at least one fluid outlet (17) which is arranged in the tank base (14) in a manner known per se and is provided in addition to the connecting channel or the connecting channels (11), the total cross-sectional area of the fluid outlet(s) (17) being less than that of the connecting channel or the connecting channels (11).

11. An insert in accordance with any one of Claims 1 to 9, the tank being inserted in the shaft in a fluid-tight and gas-tight manner and its upper end being provided with a laterally projecting flange which, with the interpositioning of sealing, rests against a projection of the shaft wall, preferably against a frame supporting a shaft cover, characterised in that the sealing is formed by an inflatable flexible hose (8).

## Revendications

1. Insert pour un puits, avantageusement un puits de conduit pouvant être ventilé, comportant une cuve (9) en une matière étanche aux liquides, avantageusement en matière plastique, dont la cavité est reliée par au moins un canal de liaison avec la partie du puits se trouvant au-dessous de la cuve, le canal de liaison (11) pouvant être fermé par un organe d'obturation (12), caractérisé par le fait que l'organe d'obturation est actionné en fonction du niveau de liquide dans la cuve(9), cet organe se fermant lorsqu'un niveau prédéterminé de liquide est atteint.

2. Insert selon la revendication 1, caractérisé par le fait que l'organe d'obturation (12) est constitué par une soupape à flotteur.

3. Insert selon la revendication 1 et 2, caractérisé par le fait que l'organe d'obturation (12) se compose d'un flotteur, avantageusement sphérique, qui coopère avec un siège de soupape (13) disposé dans le canal de liaison (11).

4. Insert selon la revendication 1, 2 ou 3, caractérisé par le fait que la partie du canal de liaison (11) située au-dessous de l'organe d'obturation s'étend vers le haut en partant d'une embouchure (15) dans la région du fond de cuve (14).

5. Insert selon la revendication 4, caractérisé par le fait que la partie du canal de liaison (11) située au-dessus de l'organe d'obturation (12) débouche dans une ouverture (16) de la paroi latérale (10) de la cuve (9), un espace intermédiaire relié à la partie du puits se trouvant au-dessous de la cuve (9) étant maintenu libre entre cette paroi latérale (10) et la paroi du puits (1).

6. Insert selon la revendication 4, caractérisé par le fait que la partie de la canalisation de liaison (11) située au-dessus de l'organe d'obturation (12) débouche par un coude (24) dans une ouverture (25) du fond de cuve (14) (figure 4).

7. Insert selon l'une des revendications 1 à 6, caractérisé par le fait que plusieurs canalisations de liaison (11) sont disposées le long de la paroi latérale (10) de la cuve (9).

8. Insert selon la revendication 7, caractérisé par le fait qu'un corps de remplissage (19) est prévu au milieu de la cuve (9), faisant saillie à partir du fond de cuve (14) (figure 2).

9. Insert selon les revendications 1 à 4, caractérisé par le fait qu'un seul canal de liaison (11) est prévu, dont l'embouchure disposée dans la région du fond de cuve (14) est située à distance de la paroi latérale (10) de la cuve (9), avantageusement dans un creux (21) du fond de cuve.

10. Insert selon l'une des revendications 1 à 9, caractérisé par le fait que la cavité de la cuve (9) est en liaison avec la partie du puits se trouvant au-dessous de la cuve (9) par au moins une ouverture de sortie de liquide (17) prévue en plus de la ou des canalisations de liaison (11), disposée d'une manière connue en soi dans le fond de cuve (14), la surface totale de la section transversale de la (des) ouverture(s) (17) étant plus petite que celle de la (des) canalisation(s) de liaison (11).

11. Insert selon l'une des revendications 1 à 9 dans lequel la cuve est disposée dans le puits de manière étanche aux liquides et aux gaz et est munie à son extrémité supérieure d'une collerette s'écartant latéralement, collerette qui s'applique par l'intermédiaire d'une garniture d'étanchéité contre une saillie de la paroi du puits, avantageusement prévue sur un cadre supportant le couvercle de puits, caractérisé par le fait que la garniture d'étanchéité est agencée sous forme d'une chambre à air (8) flexible, gonflable.
